# EUROPEAN PATENT APPLICATION

(11) **EP 4 564 764 A1**
(43) Date of publication of application: **04.06.2025**
(21) Application number: 23213498.1
(22) Date of filing: 30.11.2023
(51) Int. Cl.: H04L 41/0631, H04L 67/55

(54) **METHOD AND SYSTEM FOR MAINTAINING PROCESS BUS COMMUNICATION NETWORK**

(71) Applicant: Siemens Aktiengesellschaft, 80333 München (DE)
(72) Inventor: RAJAN S, Simpson, 607803 Neyveli, Tamil Nadu (IN); AGARWAL, Abhishek, 5600347 Bangalore, Karnataka (IN); FLEMMING, Stefan, 90574 Roßtal-Buchschwabach (DE)
(74) Representative: Patentanwaltskanzlei WILHELM & BECK

(57) **Abstract**

A method (200) for maintaining a process bus communication network (100) is provided. The method involves querying data values from client devices (120) within said network. Data values are then received from both publisher devices of these client devices, which broadcast data across the network, and from subscriber devices (124) of these client devices, which seek the broadcasted data. The method further includes analysing these received data values to detect anomalies in the process bus communication network. Each detected anomaly is subsequently categorized into a configuration problem at a publisher device, a communication obstacle stemming from a mismatch between a publisher device (122) and its corresponding subscriber device, or a configuration issue at a subscriber device. The method further provides an output that includes the specifics of these identified anomalies, along with their respective classifications.

## Description

The present application relates generally to communication networks, and more particularly, to a method and system for maintaining, debugging, and managing anomalies within a process bus communication network.

Process bus systems have become the backbone of modern industrial and commercial applications. With the evolution of digital technology, there has been a shift from traditional point-to-point wiring systems to more sophisticated digital communication networks. These networks, known as process bus communication networks, are complex systems that allow multiple devices to communicate with one another, facilitating efficient data exchange. In the past few decades, there has been a notable increase in the adoption of such networks across various sectors, from manufacturing units to power distribution systems. The proliferation of such networks can be attributed to their ability to provide real-time data transmission, reduced wiring complexities, and their adaptability to cater to varied device configurations. As industries continue adopting automation and real-time monitoring, the significance of process bus communication networks is increasing.

However, the intricate nature of the process bus communication networks also leads to some challenges. The communication expected between devices, categorized mainly as publisher devices and subscriber devices, may sometimes encounter inconsistencies. These inconsistencies can arise from multiple sources. For instance, the publisher devices, responsible for broadcasting data, and the subscriber devices, which act on this broadcasted data, have to be in sync, ensuring data integrity and timely action. Any misalignment, be it in terms of timing, data format, or protocol, can lead to inefficiencies or even operational failures. Further, in the process bus communication networks with an array of devices with different configurations, ensuring compatibility between all devices is also a challenge.

In light of the challenges presented by the state of the art, there is a need for a comprehensive, adaptive, and intelligent solution to maintain and manage the process bus communication networks. Such solution may proactively monitor, analyse, detect, and even rectify anomalies.

The present invention seeks to overcome these challenges by providing a computer-implemented method for maintaining a process bus communication network that addresses these limitations. The present method introduces an approach to network maintenance and management. The present method that ensures data integrity and timely communication, and also simplifies the intricate interactions within the process bus communication network. This may ensure that process bus communication networks are efficient, reliable, and adaptable to evolving technological landscapes.

The object of the present invention is achieved by a computer-implemented method for maintaining a process bus communication network. The method comprises querying data values from client devices operating in the process bus communication network. The method further comprises receiving the data values for one or more publisher devices of the client devices, broadcasting data in the process bus communication network, and one or more subscriber devices of the client devices, seeking broadcasted data in the process bus communication network. The method further comprises processing the received data values to detect anomalies in the process bus communication network. The method further comprises classifying each of the detected anomalies into at least one of: a configuration issue at one of the one or more publisher devices, a communication issue due to incompatibility between one of the one or more publisher devices and corresponding one of the one or more subscriber devices, a configuration issue at one of the one or more subscriber devices. The method further comprises providing an output comprising details of the detected anomalies, including classification thereof.

In one or more embodiments, querying the data values from the client devices operating in the process bus communication network comprises utilizing web services to facilitate extraction of the data values from the client devices.

In one or more embodiments, processing the received data values to detect anomalies in the process bus communication network comprises: performing temporal analysis on the received data values to determine timing sequences of the data values; and flagging the data values deviating from corresponding one of the determined timing sequences as an anomaly.

In one or more embodiments, processing the received data values to detect anomalies in the process bus communication network comprises: performing data integrity checks on the received data values by determining hash values associated with the respective data values; and identifying mismatches between the determined hash value and a computed hash value for the respective data values as an anomaly.

In one or more embodiments, processing the received data values to detect anomalies in the process bus communication network comprises using one or more of statistical analysis techniques, machine learning techniques.

In one or more embodiments, classifying each of the detected anomalies comprises: processing the received data values in the one or more publisher devices to detect configuration setting(s) therein related to one or more of: an unset parameter, a mismatched protocol version, incorrect data transmission rates, inconsistencies in data formatting protocols, at one of the one or more publisher devices; and if a related configuration setting(s) is detected, categorizing the corresponding detected anomaly as the configuration issue at one of the one or more publisher devices.

In one or more embodiments, classifying each of the detected anomalies comprises: processing the data values to detect discrepancies related to one or more of: data packet losses, timing misalignments, protocol mismatches, encryption inconsistencies, between one of the one or more publisher devices and the corresponding one of the one or more subscriber devices; and if a discrepancy is detected, categorizing the corresponding detected anomaly as the communication issue due to incompatibility between one of the one or more publisher devices and the corresponding one of the one or more subscriber devices.

In one or more embodiments, classifying each of the detected anomalies comprises: processing the received data values in the one or more subscriber devices to detect configuration setting(s) therein related to one or more of: incomplete data reception settings, un-synced data synchronization settings, unsupported data formats, missing security protocols, at one of the one or more subscriber devices; and if a related configuration setting(s) is detected, categorizing the corresponding detected anomaly as the configuration issue at one of the one or more subscriber devices.

In one or more embodiments, classifying each of the detected anomalies comprises: fetching Logical Scaled Value Settings (LSVS) from the publisher devices and the subscriber devices; assessing Sampled Value Control Block Reference (svcbRef) of the LSVS to determine status thereof; and if the svcbRef of the LSVS is not correctly set, categorizing the corresponding detected anomaly as the configuration issue at one of the one or more publisher devices or one of the one or more subscriber devices.

In one or more embodiments, the method further comprises determining at least one corrective action for each of the detected anomalies based, at least in part, on the classification thereof.

In one or more embodiments, the method further comprises initializing the at least one corrective action for each of the detected anomalies either automatically based on predefined conditions or based upon receiving approval from a user.

In one or more embodiments, the method further comprises providing the output comprising details of the determined at least one corrective action.

In one or more embodiments, the method further comprises providing an interface to display the output, with the details of the detected anomalies being displayed adjacent to representation of the client device pertaining thereto, in a schematic of the process bus communication network.

The object of the present invention is also achieved by a system comprising one or more processing units and a memory unit configured to execute the steps of the computer-implemented method according to any one of the preceding method steps.

The object of the present invention is further achieved by a computer program product, having machine-readable instructions stored therein, that when executed by the one or more processing units, cause the processing unit to perform aforementioned method steps.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
- FIG 1: is a schematic representation of an exemplary process bus communication network, in accordance with one or more embodiments of the present invention;
- FIG 2: is a flowchart representation of a computer-implemented method for maintaining the process bus communication network, in accordance with one or more embodiments of the present invention;
- FIG 3: is a block diagram representation of a system for maintaining the process bus communication network, in accordance with one or more embodiments of the present invention;
- FIG 4: is a flow diagram representation of a process for managing the process bus communication network, in accordance with one or more embodiments of the present invention; and
- FIG 5: is an exemplary depiction of an interface providing output for maintaining the process bus communication network, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for maintaining a process bus communication network are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

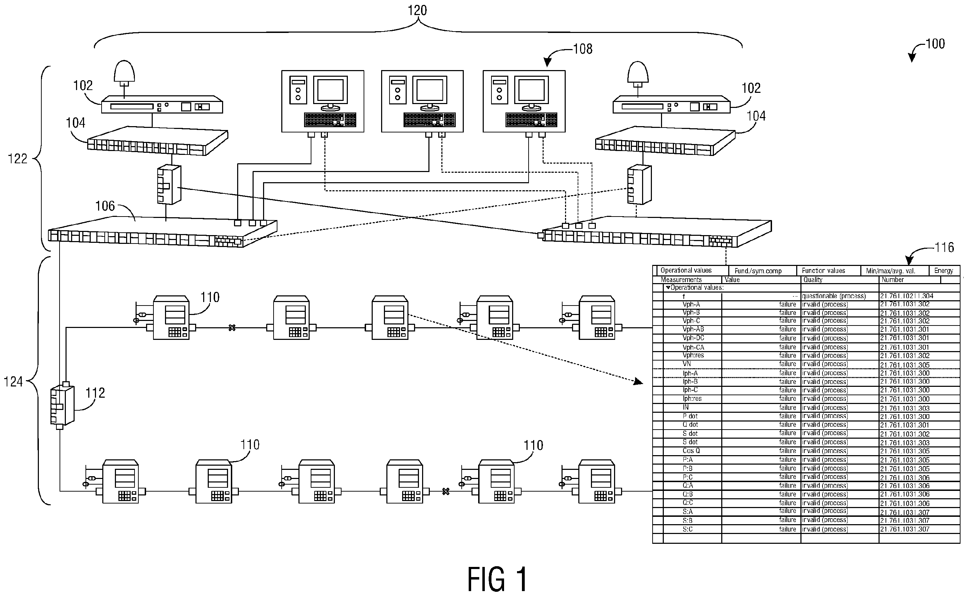

Referring to FIG 1, illustrated is a schematic of an exemplary process bus communication network (sometimes referred to as "network," and generally represented by reference numeral 100). The process bus communication network 100 includes a plurality of timing sources 102 and timing convert-masters 104, each coupled to one another. The process bus communication network 100 further includes multiple power supply units 106 interconnected amongst themselves and further communicatively coupled to a central control system 108. The central control system 108 is further operatively connected to various measuring units 110 and protection relay and control devices 112, each forming part of distinct connection clusters. Additionally, a data grid (or data tabulation) 116 provides various parameters or metrics associated with operation of the process bus communication network 100.

The various components within the process bus communication network 100 are interconnected via a combination of connections, as represented by solid lines and dashed lines each type of line representing a distinct type of connection or communication channel. These components form client devices (as broadly represented by reference numeral 120) for process bus communication network 100, and can be broadly categorized into two distinct types: publisher devices 122 and subscriber devices 124. The publisher devices 122 are components that helps in broadcasting or disseminating data to other devices within the process bus communication network 100. Their primary function is to make specific data values or information packets available to other client devices 120, ensuring real-time updates and synchronization. On the other hand, the subscriber devices 124 actively seek out and receive this broadcasted data, by listening and identifying relevant data from the publisher devices 122, and act based on the received information. In general, while the publisher devices 122 initiate the communication, the subscriber devices 124 respond to it, thus maintaining a dynamic and responsive network environment.

In the present configuration, the one or more publisher devices 122 of the client devices 120 may include devices such as timing convert-masters 104 and/or measuring units 110, as they generate data or signals that other devices in the system may need. Also, the one or more subscriber devices 124 of the client devices 120 may include the central control system 108 and/or the protection relay and control devices 112, as they consume data generated by other devices to perform their functions.

In an exemplary embodiment, the timing sources 102 can be generic global positioning system (GPS) clock sources. Each timing source 102 is directly connected to an associated timing convert-master 104, which may serve as a medium to convert timing signals for synchronization and system coordination. In the present embodiments, the timing convert-masters 104 may be exemplified by devices that convert master clock signals into formats suitable for various components within the process bus communication network 100. As an example, the timing convert-master 104 can be an RSCB/MM Convert-master with connectivity modules, such as Wi-Fi.

The power supply units 106 serve to distribute power to various components of the process bus communication network 100. Each of the power supply units 106 is linked to the other by primary connections (as represented by solid lines), such as electrical or communicative in nature. The power supply units 106 can be generic SCADA (Supervisory Control and Data Acquisition) main power supply units. In the exemplary embodiment, the power supply units 106 may be represented as SCADA Main PSU 1, SCADA Main PSU 2, and SCADA Main PSU 3.

The central control system 108, placed at the core of the process bus communication network 100, may act as a central hub or node that oversees and manages communication, coordination, and control across all interconnected devices and units. The central control system 108 is employed for efficient operation, coordination, and monitoring of the entire process bus communication network 100.

The measuring units 110, which may be generic measuring devices, provide measurements related to various parameters within the process bus communication network 100. In the given embodiment, the measuring units 110 may be exemplified by ARL type measuring units. These units can measure attributes such as current, voltage, power factor, frequency, and other relevant electrical parameters. Further, the protection relay and control devices 112 ensure the safety of the process bus communication network 100 by detecting anomalies and initiating protective actions when required. These may include, but not limited to, JBU type protection relay and control devices.

The data grid 116 serves as a repository or display of real-time or static data related to the operation of the process bus communication network 100. The data grid 116 provides a comprehensive overview of the status, readings, or configurations of the various components within the system. The data grid 116 is particularly useful for monitoring, diagnostics, and decision-making purposes for the process bus communication network 100. The data grid 116 can display data such as status indicators, measured values, thresholds, alarms, or any other relevant metrics that assist operators or automated systems in making informed decisions regarding the operation, control, and maintenance of the process bus communication network 100.

It may be appreciated by a person skilled in the art that contemporary process bus systems, such as the process bus communication network 100 may be susceptible to certain operational challenges. Potential anomalies within the exemplary process bus communication network 100 may arise during its operation, which can hinder its performance, safety, and reliability. With multiple interconnected components, including the timing sources 102, the timing convert-masters 104, the power supply units 106, the central control system 108, the measuring units 110, and the protection relay and control devices 112, ensuring seamless communication and operation becomes important. Disruptions in this communication can lead to inefficiencies, inaccuracies, or system failures.

One apparent anomaly may be configuration issues at the publisher devices 122. For instance, the timing convert-masters 104, acting as medium to convert timing signals, may potentially suffer from unset parameters, mismatched protocol versions, incorrect data transmission rates, or inconsistencies in data formatting protocols. Similarly, communication issues due to incompatibility between publisher devices 122 and the corresponding subscriber devices 124 may arise. This situation may be evident in the interaction between measuring units 110 and the central control system 108. For example, there may be discrepancies such as data packet losses, timing misalignments, protocol mismatches, or encryption inconsistencies that can disrupt accurate measurement readings and reporting. Furthermore, configuration issues within the subscriber devices 124 can also impede efficiency of the process bus communication network 100. The central control system 108 may face issues like incomplete data reception settings, un-synced data synchronization settings, unsupported data formats, or missing security protocols.

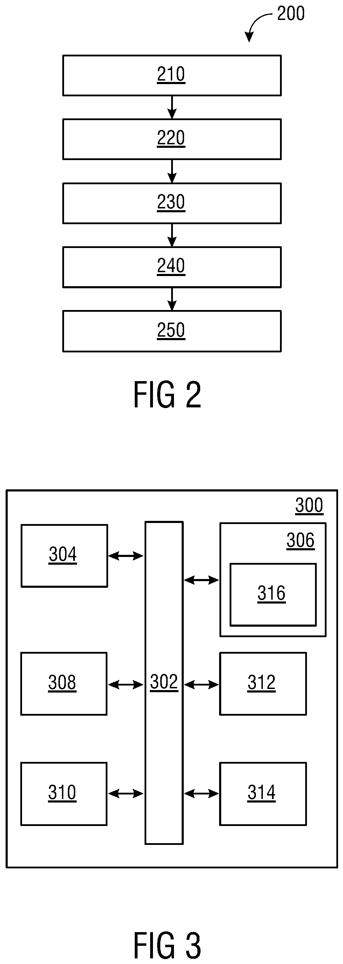

Referring now to FIG 2, illustrated is a flowchart of a method (as represented by reference numeral 200) for maintaining the process bus communication network 100, in accordance with one or more embodiments of the present invention. As discussed, the process bus communication network 100 involves interactions between multiple devices to ensure seamless communication and operations. In particular, herein, the publisher devices 122 transmit data and the subscriber devices 124 uses this broadcasted data for their functions. In these networks, anomalies or discrepancies can emerge, potentially compromising the efficiency, security, and reliability thereof. The present method 200 aims to maintain the efficiency of the process bus communication network 100. The method 200 involves monitoring of data values traversing the network, processing these values to detect any anomalies, and subsequently classifying these anomalies to identify their root causes. The present method 200 utilizes various techniques and protocols to ensure comprehensive analysis and provides outputs detailing the nature, classification, and potential solutions for these detected anomalies.

Referring to FIG 3, illustrated is a block diagram of a system 300 for maintaining the process bus communication network 100, in accordance with one or more embodiments of the present invention. It may be appreciated that the system 300 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 300 may be embodied as a computer-program product programmed for identifying the test scenarios for testing the behaviour competencies of the autonomous vehicles. The system 300 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip.

In an exemplary embodiment, as illustrated, the system 300 includes a communication mechanism such as a bus 302 for passing information among the components of the system 300. The system 300 includes one or more processing units 304 and one or more memory units 306. Herein, the memory unit 306 is communicatively coupled to the processing unit 304. In an example, the memory unit 306 may be embodied as a computer readable medium on which program code sections of a computer program are saved, the program code sections being loadable into and/or executable in a system to make the system 300 execute the steps for performing the said purpose.

Generally, as used herein, the term "processing unit" refers to a computational element that is operable to respond to and processes instructions that drive the system 300. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 300.

Herein, the memory unit 306 may be volatile memory and/or non-volatile memory. The memory unit 306 may be coupled for communication with the processing unit 304. The processing unit 304 may execute instructions and/or code stored in the memory unit 306. A variety of computer-readable storage media may be stored in and accessed from the memory unit 306. The memory unit 306 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 304 has connectivity to the bus 302 to execute instructions and process information stored in the memory unit 306. The processing unit 304 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 304 may include one or more microprocessors configured in tandem via the bus 302 to enable independent execution of instructions, pipelining, and multithreading. The processing unit 304 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 300 may further include an interface 308, such as a communication interface (with the said terms being interchangeably used) which may enable the system 300 to communicate with other systems for receiving and transmitting information. The communication interface 308 may include a medium (e.g., a communication channel) through which the system 300 communicates with other system. Examples of the communication interface 308 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 308 may include one or more of a wired connection, a wireless network, cellular networks such as 3G, 3G, 4G, 5G mobile networks, and a Zigbee connection.

The system 300 also includes a database 310. As used herein, the database 310 is an organized collection of structured data, typically stored in a computer system and designed to be easily accessed, managed, and updated. The database 310 may be in form of a central repository of information that may be queried, analysed, and processed to support various applications and business processes. In the system 300, the database 310 provides mechanisms for storing, retrieving, updating, and deleting data, and typically includes features such as data validation, security, backup and recovery, and data modelling.

The system 300 further includes an input device 312 and an output device 314. The input device 312 may take various forms depending on the specific application of the system 300. In an example, the input device 312 may include one or more of a keyboard, a mouse, a touchscreen display, a microphone, a camera, or any other hardware component that enables the user to interact with the system 300. Further, the output device 314 may be in the form of a display, a printer, a communication channel, or the like.

In the present system 300, the processing unit 304 and accompanying components have connectivity to the memory unit 306 via the bus 302. The memory unit 306 includes both dynamic memory (e.g., RAM, magnetic disk, writable optical disk, etc.) and static memory (e.g., ROM, CD-ROM, etc.) for storing executable instructions that when executed perform the method steps described herein for maintaining the process bus communication network 100. In particular, the memory unit 306 includes a process bus management module 316 to perform steps for the said purpose. Also, in the system 300, the memory unit 306 may be configured to store the data associated with or generated by the execution of the inventive steps.

Referring to FIGS 2 and 3 in combination, the various steps of the method 200 as described hereinafter may be executed in the system 300, or specifically in the processing unit 304 of the system 300, for identifying the test scenarios for testing the behaviour competencies of the autonomous vehicles. It may be appreciated that although the method 200 is illustrated and described as a sequence of steps, it may be contemplated that various embodiments of the method 200 may be performed in any order or a combination and need not include all of the illustrated steps.

At step 210, the method 200 includes querying data values from client devices 120 operating in the process bus communication network 100. That is, the initial phase of the method 200 involves querying data values from client devices 120 that are operating within the process bus communication network 100. By initiating these queries, the data that relates to the functionalities, configurations, and communications of the client devices 120 within the process bus communication network 100 is acquired. As such, having real-time or near-real-time access to the data values from the client devices 120 is important for a comprehensive understanding of the ongoing processes within the process bus communication network 100.

The querying action is systematically initiated to gather these data values. This may involve sending specific requests or prompts to the client devices 120, to transmit the requisite data. The data values may include information like device statuses, configuration details, error logs, transmitted and received data packets, among other relevant metrics. Furthermore, the frequency and timing of the querying action can be adapted based on the specific requirements and complexities of the process bus communication network 100. In some examples, continuous or periodic querying may be utilized to closely track rapid changes or anomalies. In other examples, intermittent or periodic querying may be utilized, especially if operations are relatively stable and predictable in the process bus communication network 100.

In an embodiment, querying the data values from the client devices 120 operating in the process bus communication network 100 comprises utilizing web services to facilitate extraction of the data values from the client devices 120. Web services, in the context of the described method 200, refer to standardized protocols or interfaces that enable devices or systems to communicate over the World Wide Web. They act as intermediary mechanisms, allowing for the exchange, integration, and extraction of data between diverse systems or devices without necessitating direct interaction between them. Herein, when querying data values from the client devices 120, the web services may issue specific requests to these devices. These requests may be defined to fetch particular types of data, such as configuration details, operational metrics, error logs, or any other relevant data sets. The client devices 120, in turn, may respond to these web service requests by transmitting the desired data values, which the method 200 subsequently captures.

The present method 200 incorporates these web services to facilitate the extraction of data values from the client devices 120. Given the heterogeneity in the process bus communication network 100, where client devices 120 may be from different manufacturers or may be based on varying technological standards, the use of web services which by their design are platform-independent, allow for communication between devices or systems irrespective of their underlying architecture or operating systems. Moreover, the web services, especially those utilizing common protocols like REST (Representational State Transfer), provide a structured and standardized way to request and retrieve data. Furthermore, the inherent scalability and flexibility of the web services make them suitable for large and dynamic networks, such as the process bus communication network 100.

At step 220, the method 200 includes receiving the data values for one or more publisher devices 122 of the client devices 120, broadcasting data in the process bus communication network 100, and one or more subscriber devices 124 of the client devices 120, seeking broadcasted data in the process bus communication network 100. That is, the method 200 includes receiving data values from both the publisher devices 122 and the subscriber devices 124, to understand the end-to-end communication flow within the process bus communication network 100. As may be understood, such reception is initiated in response to the earlier querying action of the step 210 in the method 200. This comprehensive data intake may be helpful for any subsequent steps of analysis, diagnosis, and remediation that the method 200 is intended to perform.

Herein, as discussed, the publisher devices 122 are responsible for broadcasting data throughout the process bus communication network 100. Their primary function is to generate, format, and send out data packets or messages that are intended for one or more recipient devices within the network. These data values may include information about, but not limited to, volume, rate, and type of data being broadcasted, configuration settings of the publisher devices 122, error messages, or any other metrics that can provide insights into the performance and operational health of these devices. This data may be received as part of the continuous stream of data feeds that the publisher devices 122 are configured to transmit at regular intervals.

Also, as discussed, the subscriber devices 124 serve as the recipients or consumers of the data broadcasted by the publisher devices 122 within the process bus communication network 100. Their main function is to actively listen for, receive, and possibly process the data packets being sent out by the publishers. This data may include information about, but not limited to, the data packets received, the status of data synchronization, latency metrics, configuration settings, and any anomalies or issues faced during the reception of broadcasted data. This reception can be concurrent with the data collection from the publisher devices 122, providing a synchronized view of broadcasting and reception dynamics within the process bus communication network 100.

At step 230, the method 200 includes processing the received data values to detect anomalies in the process bus communication network 100. That is, once the data values have been successfully queried and received from the client devices 120 operating in the process bus communication network 100, the next phase invest processing this data specifically for detecting any anomalies that may exist within the communications and operations of the process bus communication network 100. Anomalies, in the present context, refer to deviations or irregularities from established norms or expected behaviours. These deviations may manifest in various forms, such as data transmission delays, unexpected data values, missing data packets, or even discrepancies in data formatting. Identifying these anomalies allows to identify underlying issues or malfunctions within the process bus communication network 100, including at the level of individual client devices 120 or more systemic challenges related to network communication protocols.

In general, the procedure to process the received data values involves establishing a baseline or reference against which the incoming data can be compared. This reference may be defined using historical data, predefined thresholds, or specifications provided by device manufacturers. Once this reference is set, the received data values are subjected to a series of checks and analyses to identify deviations. For instance, in one example, if data is expected from a particular client device 120 at fixed intervals, but the received data values show inconsistencies in these timings, it may be flagged as an anomaly. In another example, if multiple subscriber devices 124 simultaneously report missing or corrupted data packets originating from a single publisher device 122, it may suggest a malfunction or misconfiguration at the publisher device 122. Thus, by processing and analysing the received data values in real-time and in relation to established references, the anomalies in the process bus communication network 100 can be detected.

In an embodiment, processing the received data values to detect anomalies in the process bus communication network 100 comprises performing temporal analysis on the received data values to determine timing sequences of the data values; and flagging the data values deviating from corresponding one of the determined timing sequences as an anomaly. This form of analysis focuses on examining the timing sequences associated with the data values as they flow within the process bus communication network 100. Temporal analysis, in this context, aids in establishing standard timing sequences or patterns based on historical data or predefined benchmarks. These sequences may include parameters like the expected intervals between successive data packets or the anticipated duration of specific data transmissions. Once the timing sequences have been determined, the received data values are constantly compared against these established sequences. Any data value that deviates from its corresponding determined timing sequence is flagged as an anomaly. Such deviations may be indicative of various issues, ranging from network congestion, malfunctioning hardware, or even unauthorized interventions.

In another embodiment, processing the received data values to detect anomalies in the process bus communication network 100 comprises performing data integrity checks on the received data values by determining hash values associated with the respective data values; and identifying mismatches between the determined hash value and a computed hash value for the respective data values as an anomaly. This form of analysis is based on performing data integrity checks on the received data values, by determination of hash values associated with the respective data values. A hash value is a fixed-size numerical value computed from an input data set, and any minute change in the input will produce a substantially different hash value. In the present method 200, as data values are received from the client devices 120 operating in the process bus communication network 100, hash values are determined for these data sets (often provided or associated with the transmitted data). Concurrently, the hash values for the same data sets are computed. Subsequently, a comparison is executed between the determined hash value and the computed hash value. If there is a mismatch between these hash values, it may be an indicator of a potential anomaly. Such mismatches may arise from data corruption during transmission, unauthorized data modifications, or even discrepancies in data formatting.

In an embodiment, processing the received data values to detect anomalies in the process bus communication network 100 comprises using one or more of statistical analysis techniques, machine learning techniques. The integration of these advanced techniques ensures that not only immediate and explicit anomalies are detected, but subtle patterns that may be indicative of emerging issues or threats are also detected within the process bus communication network 100. It may be understood, as used herein, statistical analysis techniques analyse the inherent properties and patterns in the receive data. For instance, these techniques may involve examining data value distributions, identifying outliers, or even assessing the variance or standard deviations of received data values. By setting statistical thresholds and benchmarks, any data value or pattern that lies outside these predefined bounds is flagged as a potential anomaly. On the other hand, machine learning techniques provide a dynamic and adaptive approach to anomaly detection. By training on vast datasets, machine learning models can learn and predict "normal" behaviour within the process bus communication network 100. As data flows and is processed, these models compare the data against their learned patterns. Deviations or patterns that do not align with the model's predictions are classified as anomalies.

At step 240, the method 200 includes classifying each of the detected anomalies into at least one of: a configuration issue at one of the one or more publisher devices 122, a communication issue due to incompatibility between one of the one or more publisher devices 122 and corresponding one of the one or more subscriber devices 124, a configuration issue at one of the one or more subscriber devices 126. By systematically classifying each detected anomaly into one of these defined categories, the network administrators are equipped with precise knowledge about the nature of the irregularity. Such classification also allows to provide actionable insights about the nature and possible source of the detected irregularity, allowing for tailored corrective measures. This, in turn, helps in better issue resolution and also in optimizing network configurations to preemptively mitigate future anomalies.

In particular, herein, the first category of anomalies pertains to configuration issues found at one or more of the publisher devices 122. The publisher devices 122, by their fundamental role, are responsible for disseminating data across the process bus communication network 100. Any misconfiguration at these publisher devices 122 can lead to data dissemination irregularities or even halt data transmission entirely. Configuration anomalies at publisher devices 122 may include a range of issues, including parameters that may not have been correctly set, discrepancies in the protocol versions being utilized, or inconsistencies in data transmission rates. Such misconfigurations may not just disrupt the flow of data from the affected publisher device 122 but may also cause cascading issues downstream, affecting the overall reliability and efficiency of the process bus communication network 100.

In the present embodiments, classifying each of the detected anomalies comprises processing the received data values in the one or more publisher devices 122 to detect configuration setting(s) therein related to one or more of: an unset parameter, a mismatched protocol version, incorrect data transmission rates, inconsistencies in data formatting protocols, at one of the one or more publisher devices 122; and if a related configuration setting(s) is detected, categorizing the corresponding detected anomaly as the configuration issue at one of the one or more publisher devices 122. The primary objective here is to uncover any configuration setting or settings that may have led to the anomaly. Such potential configuration irregularities can originate from multiple sources. For instance, this may be a result of an unset parameter within the publisher device 122, leading to inconsistent behaviour. Another probable cause can be a mismatched protocol version that disrupts the standard communication dynamics within the process bus communication network 100. Moreover, issues like incorrect data transmission rates can affect the flow and sequence of data dissemination. Additionally, inconsistencies in data formatting protocols may lead to misinterpreted data streams. When any of these settings, indicative of potential issues, are detected within the publisher device 122, the corresponding detected anomaly may be categorized as a configuration issue specifically related to the concerned publisher device 122.

Another category of anomalies arises from communication issues due to incompatibilities between the publisher devices 122 and the corresponding subscriber devices 124. Given that the process bus communication network 100 operates on a publisher-subscriber model, incompatibility related anomalies may manifest in various ways. There may be instances of data packet losses, where transmitted data packets from a publisher device 122 fail to reach a subscriber device 124. Other issues may involve timing misalignments, where the data reception timing at subscriber devices 124 does not align with the data transmission timing of publisher devices 122. Further, discrepancies in protocols or even inconsistencies in encryption techniques between the two entities may lead to anomalies, such as communication breakdowns.

In the present embodiments, classifying each of the detected anomalies comprises processing the data values to detect discrepancies related to one or more of: data packet losses, timing misalignments, protocol mismatches, encryption inconsistencies, between one of the one or more publisher devices 122 and the corresponding one of the one or more subscriber devices 124; and if a discrepancy is detected, categorizing the corresponding detected anomaly as the communication issue due to incompatibility between one of the one or more publisher devices 122 and the corresponding one of the one or more subscriber devices 124. This involves processing the data values to discern any inconsistencies or discrepancies to identify the underlying communication issue between any one of the publisher device 122 and its corresponding subscriber device 124. These discrepancies can manifest in multiple forms. For instance, there may be evident data packet losses, indicating gaps in communication. Timing misalignments can also come to the fore, pointing towards a lack of synchronization between devices. Furthermore, more technical issues like protocol mismatches or even inconsistencies in the encryption techniques employed may lead to such anomaly. Upon detecting any of these discrepancies, the corresponding detected anomaly may be categorized as a communication issue due to incompatibility between the concerned publisher device 122 and its corresponding subscriber device 124.

Yet another category of anomalies may include configuration issues at subscriber devices 124. The subscriber devices 124, though primarily recipients of data, have their configurations that ensure the proper reception and processing of incoming data. Anomalies may arise when there are configuration issues at these subscriber devices 124. Configuration-related anomalies at the subscriber devices 124 may be due to settings that result in incomplete data reception, implying that the device may be discarding certain data packets. Alternatively, there may be issues with data synchronization settings, causing the device to be out of sync with incoming data streams. Furthermore, configurations that lead the subscriber device 124 to expect certain data formats, which are not in line with what is being broadcasted, or missing security protocols, can also contribute to discrepancies.

In the present embodiments, classifying each of the detected anomalies comprises processing the received data values in the one or more subscriber devices 124 to detect configuration setting(s) therein related to one or more of: incomplete data reception settings, un-synced data synchronization settings, unsupported data formats, missing security protocols, at one of the one or more subscriber devices 124; and if a related configuration setting(s) is detected, categorizing the corresponding detected anomaly as the configuration issue at one of the one or more subscriber devices 124. This process involves analysing the received data values within the subscriber devices 124 to detect any configuration settings that may be out of order or misconfigured, leading to anomalies. Potential configuration issues at the subscriber devices 124 can vary widely. Settings that lead to incomplete data reception can cause the device to discard certain crucial data packets. Data synchronization settings may also be out of sync, causing misalignments with incoming data streams. Additionally, if the subscriber device 124 is set up to expect certain data formats, which do not match the broadcasted data, anomalies can arise. Further, missing security protocols can also be a significant source of anomalies, especially in a networked environment. Upon identifying such setting(s) in any of the subscriber device 124, the corresponding detected anomaly may be categorized as a configuration issue associated with the concerned subscriber device 124.

In still other embodiments of the present invention, classifying each of the detected anomalies comprises fetching Logical Scaled Value Settings (LSVS) from the publisher devices and the subscriber devices; assessing Sampled Value Control Block Reference (svcbRef) of the LSVS to determine status thereof; and if the svcbRef of the LSVS is not correctly set, categorizing the corresponding detected anomaly as the configuration issue at one of the one or more publisher devices 122 or one of the one or more subscriber devices 124. Herein, the method 200 implements a specialized procedure for classifying anomalies based on the LSVS within the devices operating in the process bus communication network 100. This involves, first, initiating an action to fetch the LSVS from both the publisher devices 122 and the subscriber devices 124. This fetching process is used to gain insight into the internal configurations and settings of these devices within the process bus communication network 100. Following the retrieval of the LSVS, an assessment phase is initiated. Here, the primary focus is on the svcbRef value associated with the LSVS. The svcbRef acts as a reference pointer for the LSVS, ensuring that it is aligned with the standard configurations and that data interactions proceed without any issues. A thorough assessment of the svcbRef provides insights into its current status and whether it aligns with the expected standard settings. In case the assessment provides that the svcbRef of the LSVS is not set according to the stipulated norms or exhibits discrepancies, the issue is considered as an anomaly. The detected anomaly, in this case, is categorized as a configuration issue, indicating either one of the publisher devices 122 or one of the subscriber devices 124 as the source of this irregularity.

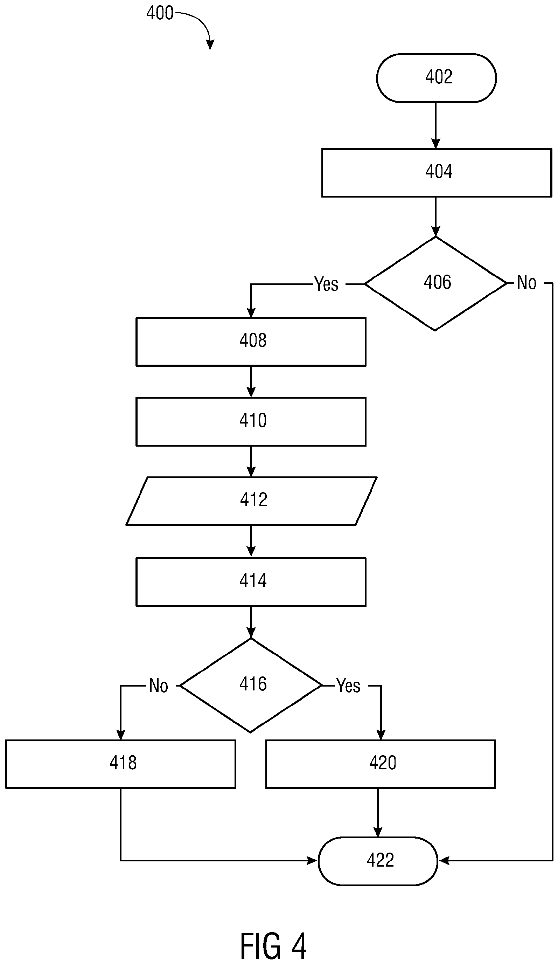

Referring to FIG 4, illustrated is a flow diagram of a process (as represented by reference numeral 400) for managing the process bus communication network 100 is provided, in accordance with one or more embodiments of the present invention. At block 402, the process 400 commences, where the workflow for managing the process bus communication network 100 is initiated. At block 404, the process 400 includes initiating process bus online debugging. This involves starting diagnostic measures that monitor and analyse the process bus communication network 100 for any anomalies or inconsistencies. At block 406, the process 400 involves checking for communication failures within the process bus communication network 100. This can be achieved by probing the network nodes or devices for their status and verifying if data transfer or reception is taking place as expected. If no communication failure is detected, the process 400 ends at block 422. If any such failure is detected, the process 400 moves to block 408.

At the block 408, the process 400 includes decoding the failure reason from the communication module. A communication module may be utilized for such purpose, which may be responsible for overseeing data transfer, and it will typically store or generate error codes or messages that provide insight into the cause of the failure. At block 410, following the identification of a communication error, the process 400 includes listing out the reason for the communication failure. This step ensures that the identified errors are systematically recorded, making them easier to address and resolve. At block 412, the catalogued communication failures are compiled. This collection provides a centralized repository of all identified anomalies within the process bus communication network 100.

At block 414, the process 400 involves displaying the recorded failures. This ensures that system administrators or relevant personnel are apprised of the issues and can take necessary corrective actions. At block 416, a second check for communication failures is conducted. This redundant measure ensures that no errors are overlooked and may also verify if previously identified errors persist or if new errors have arisen. At block 418, if no communication failures are detected during the second check, the process 400 includes displaying the communication retrieve process. This step provides feedback indicating that the communication channels are functioning as expected. At block 420, if communication failures are still present, the process 400 involves auto-resolving the communication failure and re-initiating the communication. Automated tools or protocols are deployed to rectify the identified issues, after which communication is restarted to ensure proper data transfer. Once all necessary checks and corrective actions are performed, the workflow for managing the process bus communication network 100 is terminated at the block 422.

Referring back to FIGS 2 and 3, again in combination, the method 200 further includes providing an output comprising details of the detected anomalies, including classification thereof. That is, once the anomalies are identified and classified, this information is collated by organizing each anomaly with its respective classification. This pairing provides clarity on the nature and potential root cause of each discrepancy. For instance, if an anomaly is identified as a result of a mismatched protocol version in one of the publisher devices 122, this detail will be accurately reflected in the output, ensuring that there is no ambiguity regarding its origin or the type of issue. This structured output aids in timely diagnostics by helping in identifying specific sections of the process bus communication network 100 where issues prevail. This enables network administrators or maintenance personnel to effectively address the issues in the process bus communication network 100.

In some embodiments, the method 200 further includes determining at least one corrective action for each of the detected anomalies based, at least in part, on the classification thereof. That is, once anomalies within the process bus communication network 100 have been determined, the method 200 further involves determining appropriate corrective actions tailored to each anomaly. For this purpose, the method 200 may involve analysing a repository of potential corrective measures, where each measure is mapped to a specific classification of anomalies. For instance, if a detected anomaly is classified as a configuration issue at one of the publisher devices 122, a corrective action such as resetting the configuration parameters of the concerned device or updating its firmware may be provided. Conversely, if the anomaly is identified as a communication issue due to incompatibility between one of the publisher device 122 and the corresponding subscriber device 124, a corrective action like protocol alignment, encryption standard synchronization, or even hardware replacement in some cases may be provided. By proposing actions based on the precise classification of the anomalies, the method 200 helps reduce the trial-and-error approaches, and thus ensures a faster resolution of anomalies in the process bus communication network 100.

In some embodiments, the method 200 further includes initializing the at least one corrective action for each of the detected anomalies either automatically based on predefined conditions or based upon receiving approval from a user. That is, this mechanism of action initiation includes an automated execution based on predefined conditions or a manual trigger based upon receiving explicit approval from an authorized user. This approach to initializing corrective actions facilitates automatic corrections for routine issues while allowing human oversight for significant interventions. This ensures both efficiency and informed decision-making, optimizing the health and performance of the process bus communication network 100.

Specifically, herein, a set of predefined conditions that allow for the automatic initiation of corrective actions are utilized. These conditions are established based on a comprehensive understanding of the process bus communication network 100 and its operational dynamics. For instance, minor configuration discrepancies that do not severely impede the network's performance may be rectified automatically once detected, without necessitating human intervention. This allows the network to maintain its efficiency with minimal disruption. However, in scenarios where the corrective action may lead to significant changes or temporary downtimes, the method 200 involves seeking explicit approval from an authorized user, ensuring that those responsible for the network's maintenance can make informed decisions. Herein, upon detection of a significant anomaly and determination of its corresponding corrective action, a notification may be generated which provides the user with an overview of the detected anomaly, its classification, and the proposed corrective action. The user can then review this information and either approve the initiation of the corrective action or choose an alternate course of action.

In some embodiments, the method 200 further includes providing the output comprising details of the determined at least one corrective action. Herein, upon the successful determination of the corrective action for a detected anomaly, the output is generated consolidating various factors associated with the corrective action, including, but not limited to, a description of the anomaly, its classification, the reason behind the chosen corrective action, any potential implications of implementing the action, etc. This feature ensures that users, administrators, or any associated system components are informed about the measures that are being proposed or initiated to mitigate the identified issues within the process bus communication network 100. This output can be presented in various formats suitable for the end recipient. For instance, for a system administrator or an engineer responsible for maintaining the process bus communication network 100, the output may be in the form of a report or a dashboard update. Such a report or dashboard may contain technical details, facilitating a deeper dive into the issue and the proposed solution.

In some embodiments, the method 200 includes providing an interface to display the output, with the details of the detected anomalies being displayed adjacent to representation of the client device 120 pertaining thereto, in a schematic of the process bus communication network 100. This involves graphically exhibiting the output, particularly details of the detected anomalies within the process bus communication network 100. Such a design choice facilitates instantaneous correlation between an anomaly and the device or devices from which it originates or on which it has an impact. Furthermore, the interface presents the information with the schematic of the process bus communication network 100. Such a holistic view ensures that any user or system administrator can immediately understand the anomaly's origin and also its potential implications on the overall network.

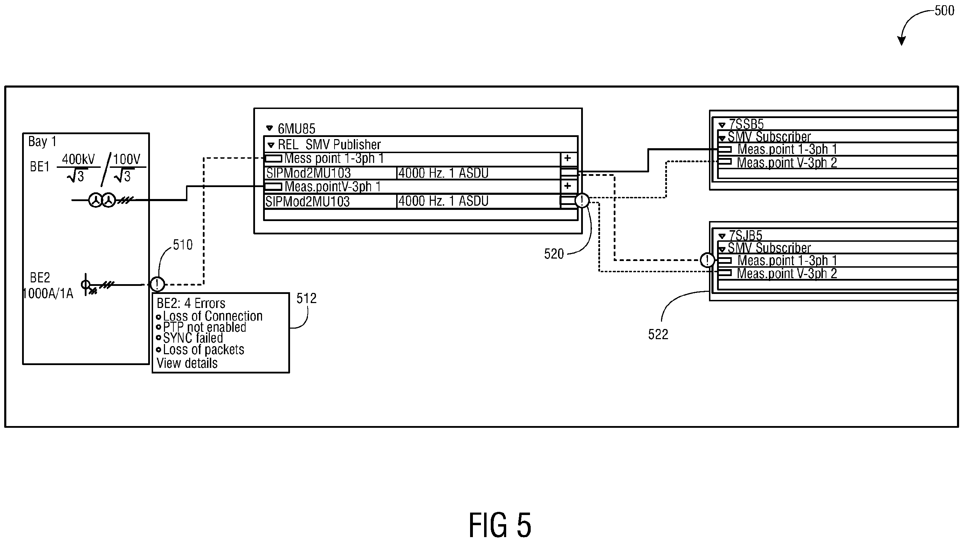

FIG 5 provides an exemplary interface 500 (as represented by reference numeral 500) depicting a configuration related to a power distribution or transmission system, particularly focusing on communication and monitoring aspects. As illustrated, the interface 500 provides error notifications 510 and 520 next to corresponding equipment or module that has encountered some communication or synchronization errors. The interface 500 further provides interface elements 512 and 522 next to the corresponding error notifications 510 and 520. These interface elements 512 and 522 may be in the form of dialog boxes which provide details or list of anomalies possibly encountered by the respective equipment or module. In some examples, these interface elements 512 and 522 may be clickable (as hinted by "View details") to provide a more in-depth understanding of the errors associated with the respective equipment or module.

In embodiments of the present invention, the process bus communication network 100 is examined to identify a diverse set of potential anomalies, especially related to configuration and hardware issues. On the configuration front, the method 200 may be utilized to identify anomalies related to the Global Positioning System (GPS), ensuring accurate temporal and spatial data synchronization across the network. The method 200 also involves analysing IP configurations, ensuring that data packets are appropriately routed and that there are no conflicts or misconfigurations that may hamper communication. Further, the method 200 may involve assessing Precision Time Protocol (PTP) configurations to ensure time synchronization across devices. Inconsistencies or misconfigurations in Intelligent Electronic Devices (IEDs) and RED boxes may also be determined using the present method 200, ensuring the proper operation and interoperability of these critical components within the process bus communication network 100. Further, the method 200 may be utilized in identifying hardware malfunctions. For instance, the method 200 may be utilized to determine if the GPS signal is compromised due to issues like a broken cable. The method 200 may also be utilized for situations where there may be a failure in the communication module, hindrances due to Fiber Optic (FO) cable damages, or disruptions because of power failures.

The present method 200 and the system 300 provide tools for process bus online debugging and fault recognition solutions. Traditional processes of fault detection, followed by the allocation of an engineer, meticulous analysis, and then strategizing a solution can be laborious and time-consuming. The proposed techniques streamline these steps, expediting the entire resolution process. The proposed enhanced mechanism may be utilized to address both technical and networking issues. When a station engineer faces a fault that may impede the operation of the station, the proposed techniques aids in the diagnosis by presenting details of the identified anomalies, and proactively resolving issues by providing comprehensive solution recommendations, detailing the exact location of the fault and the appropriate corrective action. The proposed methodology is further scalable and can be implemented for all types of process bus systems.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### Reference Numerals

| | |
|---|---|
| process bus communication network | 100 |
| timing sources | 102 |
| timing convert-masters | 104 |
| power supply units | 106 |
| central control system | 108 |
| measuring units | 110 |
| protection relay and control devices | 112 |
| data grid | 116 |
| client devices | 120 |
| publisher devices | 122 |
| subscriber devices | 124 |
| method | 200 |
| step | 210 |
| step | 220 |
| step | 230 |
| step | 240 |
| step | 250 |
| system | 300 |
| bus | 302 |
| processing unit | 304 |
| memory unit | 306 |
| interface | 308 |
| database | 310 |
| input device | 312 |
| output device | 314 |
| process bus management module | 316 |
| process | 400 |
| block | 402 |
| block | 404 |
| block | 406 |
| block | 408 |
| block | 410 |
| block | 412 |
| block | 414 |
| block | 416 |
| block | 418 |
| block | 420 |
| block | 422 |
| interface | 500 |
| error notification | 510 |
| interface element | 512 |
| error notification | 520 |
| interface element | 522 |

## Claims

1. A method (200) for maintaining a process bus communication network (100), the method (200) comprising:
querying data values from client devices (120) operating in the process bus communication network (100);
receiving the data values for one or more publisher devices (122) of the client devices (120), broadcasting data in the process bus communication network (100), and one or more subscriber devices (124) of the client devices (120), seeking broadcasted data in the process bus communication network (100);
processing the received data values to detect anomalies in the process bus communication network (100);
classifying each of the detected anomalies into at least one of: a configuration issue at one of the one or more publisher devices (122), a communication issue due to incompatibility between one of the one or more publisher devices (122) and corresponding one of the one or more subscriber devices (124), a configuration issue at one of the one or more subscriber devices (124); and
providing an output comprising details of the detected anomalies, including classification thereof.

2. The method (200) of claim 1, wherein querying the data values from the client devices (120) operating in the process bus communication network (100) comprises utilizing web services to facilitate extraction of the data values from the client devices (120).

3. The method (200) of claim 1, wherein processing the received data values to detect anomalies in the process bus communication network (100) comprises:
performing temporal analysis on the received data values to determine timing sequences of the data values; and
flagging the data values deviating from corresponding one of the determined timing sequences as an anomaly.

4. The method (200) of claim 1, wherein processing the received data values to detect anomalies in the process bus communication network (100) comprises:
performing data integrity checks on the received data values by determining hash values associated with the respective data values; and
identifying mismatches between the determined hash value and a computed hash value for the respective data values as an anomaly.

5. The method (200) of claim 1, wherein processing the received data values to detect anomalies in the process bus communication network (100) comprises using one or more of statistical analysis techniques, machine learning techniques.

6. The method (200) of claim 1, wherein classifying each of the detected anomalies comprises:
processing the received data values in the one or more publisher devices (122) to detect configuration setting(s) therein related to one or more of: an unset parameter, a mismatched protocol version, incorrect data transmission rates, inconsistencies in data formatting protocols, at one of the one or more publisher devices (122); and
if a related configuration setting(s) is detected, categorizing the corresponding detected anomaly as the configuration issue at one of the one or more publisher devices (122).

7. The method (200) of claim 1, wherein classifying each of the detected anomalies comprises:
processing the data values to detect discrepancies related to one or more of: data packet losses, timing misalignments, protocol mismatches, encryption inconsistencies, between one of the one or more publisher devices (122) and the corresponding one of the one or more subscriber devices (124); and
if a discrepancy is detected, categorizing the corresponding detected anomaly as the communication issue due to incompatibility between one of the one or more publisher devices (122) and the corresponding one of the one or more subscriber devices (124).

8. The method (200) of claim 1, wherein classifying each of the detected anomalies comprises:
processing the received data values in the one or more subscriber devices (124) to detect configuration setting(s) therein related to one or more of: incomplete data reception settings, un-synced data synchronization settings, unsupported data formats, missing security protocols, at one of the one or more subscriber devices (124); and
if a related configuration setting(s) is detected, categorizing the corresponding detected anomaly as the configuration issue at one of the one or more subscriber devices (124).

9. The method (200) of claim 1, wherein classifying each of the detected anomalies comprises:
fetching Logical Scaled Value Settings (LSVS) from the publisher devices (122) and the subscriber devices (124);
assessing Sampled Value Control Block Reference (svcbRef) of the LSVS to determine status thereof; and
if the svcbRef of the LSVS is not correctly set, categorizing the corresponding detected anomaly as the configuration issue at one of the one or more publisher devices (122) or one of the one or more subscriber devices (124).

10. The method (200) of claim 1 further comprising determining at least one corrective action for each of the detected anomalies based, at least in part, on the classification thereof.

11. The method (200) of claim 10 further comprising initializing the at least one corrective action for each of the detected anomalies either automatically based on predefined conditions or based upon receiving approval from a user.

12. The method (200) of claim 10 further comprising providing the output comprising details of the determined at least one corrective action.

13. The method (200) of claim 1 further comprising providing an interface to display the output, with the details of the detected anomalies being displayed adjacent to representation of the client device (120) pertaining thereto, in a schematic of the process bus communication network (100).

14. A system (300) comprising:
one or more processing units (304); and
a memory unit (306) communicatively coupled to the one or more processing units (304), wherein the memory unit (306) comprises a process bus management module (316) stored in the form of machine-readable instructions executable by the one or more processing units (304), wherein the process bus management module (316) is configured to perform method steps for maintaining a process bus communication network (100), according to any of the claims 1 to 13.

15. A computer-program product having machine-readable instructions stored therein, which when executed by one or more processing units, cause the one or more processing units to perform a method (200) according to any of the claims 1 to 13.
